Europäisches Patentamt

European Patent Office

Office européen des brevets

(11) Numéro de publication: **0 093 219**
**B1**

(12) **FASCICULE DE BREVET EUROPEEN**

(45) Date de publication du fascicule du brevet:
02.04.86

(51) Int. Cl.4: **H 04 B 1/66**

(21) Numéro de dépôt: **82430012.3**

(22) Date de dépôt: **30.04.82**

(54) Procédé de codage numérique et dispositif de mise en oeuvre dudit procédé.

(43) Date de publication de la demande:
09.11.83 Bulletin 83/45

(45) Mention de la délivrance du brevet:
02.04.86 Bulletin 86/14

(84) Etats contractants désignés:
**DE FR GB**

(73) Titulaire: **International Business Machines Corporation, Old Orchard Road, Armonk, N.Y. 10504 (US)**

(84) Etats contractants désignés: **DE GB**

(73) Titulaire: **Compagnie IBM FRANCE, 5 Place Vendôme, F-75000 Paris 1er (FR)**

(84) Etats contractants désignés: **FR**

(72) Inventeur: **Callens, Paul, 26 Avenue des Tuilières, F-06800 Cagnes-Sur-Mer (FR)**
Inventeur: **Galand, Claude, 56 Avenue des Tuilières, F-06800 Cagnes-Sur-Mer (FR)**

(74) Mandataire: **Tubiana, Max et al, Compagnie IBM France Département de Propriété Industrielle, F-06610 La Gaude (FR)**

(56) Documents cités:
EP - A - 0 002 998
EP - A - 0 085 820
FR - A - 2 389 277
US - A - 3 437 761

CONFERENCE RECORD OF THE 1978 IEEE INTERNATIONAL CONFERENCE ON ACUSTICS, SPEECH AND SIGNAL PROCESSING, 10-12 avril 1978, pages 307-311, New York (USA); D. ESTEBAN et al.: "9.6/7.2 KBPS voice excited predictive coder (VEPC)"
CONFERENCE RECORD OF THE 1978 IEEE INTERNATIONAL CONFERENCE ON ACUSTICS, SPEECH AND SIGNAL PROCESSING;
CONFERENCE RECORD OF THE 1978 IEEE INTERNATIONAL CONFERENCE ON ACUSTICS, SPEECH AND SIGNAL PROCESSING, 10-12 avril 1978, pages 320-325, New York (USA); D. ESTEBAN et al.: "32 KBPS CCITT compatible split band coding scheme" *Pages 321-322*

(56) Entgegenhaltungen: (Fortsetzung)
PROCEEDINGS OF THE 1974 INTERNATIONAL ZÜRICH SEMINAR ON DIGITAL COMMUNICATIONS, 12-15 mars 1974, pages B1(1) to B1(4), New York (USA); A. CROISIER: "Progress in PCM and delta modulation: Block-companded coding of speech signals" *Paragraphe 2 - "PCM block coding"*
THE BELL SYSTEM TECHNICAL JOURNAL, vol. 58, no. 3, mars 1979, pages 577-600, New York (USA); J.J. DUBNOWSKI et al.: "Variable rate coding of speech" *Paragraphe 2.2.2: multiple speaker (TASI); chapter III: partical considerations in implementing variable rate coders; chapter IV: an example of a variable-rate ADPCM coder*

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

*Domaine de l'invention*

La présente invention porte sur un procédé de codage numérique d'un signal d'origine vocale et son application à la concentration d'informations numériques provenant de plusieurs sources, sur un canal unique de transmission. Elle s'applique plus précisément à la transmission d'informations numériques d'origine vocale.

*Etat de la technique*

Les conditions de transmission numérique sur un canal donné peuvent varier dans le temps. Il est donc avantageux de pouvoir disposer d'émetteurs à plusieurs vitesses (nombre de bits par seconde) de transmission, équipés de moyens simples permettant de passer d'une vitesse à une autre en fonction des conditions de transmission du moment.

D'autre part, le coût des lignes de transmission a amené les industriels à rechercher des méthodes permettant de transmettre, sur une même voie, les informations provenant de plusieurs sources. Les techniques numériques se prêtent particulièrement bien à ce genre d'opérations. Pour ce faire, les signaux des différentes sources sont individuellement échantillonnés. Ces échantillons sont codés en numérique avant d'être alternativement et séquentiellement transmis sur la voie de transmission unique, par application des techniques dites de multiplexage dans le temps (TDM). Mais, pour que le système puisse fonctionner correctement, il est naturellement nécessaire qu'à l'autre extrémité de la voie de transmission, c'est-à-dire à la réception, chaque destinataire puisse retrouver le signal qui lui était destiné. En d'autres termes, on doit non seulement pouvoir, à la réception, redistribuer correctement les échantillons par démultiplexage, mais encore faut-il que l'information contenue dans le flot d'échantillons reçus par un destinataire soit suffisante pour permettre une reconstitution fidèle du signal transmis. Plus précisément, lorsque lesdites sources fournissent des signaux vocaux à transmettre vers des destinataires respectifs, ces derniers doivent recevoir des informations non seulement intelligibles mais de qualité suffisamment bonne pour ne pas être d'une écoute désagréable. On se trouve alors devant deux exigences contradictoires. En effet, d'une part, pour qu'un signal puisse être fidèlement reproduit, il faut que sa représentation numérique ait été aussi précise que possible, donc que la quantité des informations numériques qui le définissent soit relativement élevée. D'autre part, plus la quantité d'informations fournies par une même source, dans un intervalle de temps donné, est élevée, moins le nombre de sources desservies par une même voie de transmission pourra être important.

Les solutions apportées à ce genre de problème sont nombreuses. Leur multiplicité suffit déjà à démontrer l'intérêt pratique accordé par l'industrie à l'étude du problème et à la découverte de solutions efficaces. Mais on constate en outre une activité actuellement accrue dans le domaine technique considéré, ce qui prouve que l'on ne pense pas avoir atteint une limite dans les perfectionnements du système considéré.

Deux axes de recherches peuvent être définis, le premier porte sur le traitement du signal fourni par chacune des sources, le second s'intéresse à la gestion des sources.

S'agissant ici essentiellement de sources de signaux d'origine vocale, on tient compte, pour le traitement du signal fourni par une source donnée, des propriétés de la voix pour définir des modes de codage/décodage qui, pour une quantité d'information numérique minimale, permettent d'altérer le moins possible les qualités du signal vocal. On a défini de nombreux modes de traitement du signal vocal dans un grand nombre de revues et publications. On pourra notamment se reporter à l'ouvrage de J. Flanagan intitulé: «Speech Analysis Synthesis and Perception» publié en 1965 aux Editions Springer-Verlag, pour se familiariser avec certaines méthodes de codage de la voix. Une autre source de documentation est constituée par la publication IEEE International Conference on Acoustics, Speech and Signal Processing. On y retrouvera des techniques dites de compression de la voix, techniques ayant pour but de coder fidèlement le signal vocal à l'aide d'un minimum d'informations numériques.

Plus particulièrement, on notera l'article intitulé «9.6/7.2 KBps Voice Excited Predictive Coder (VEPC)» dans «Conference Record of the 1978 IEEE International Conference on Acoustics, Speech and Signal Processing» avril 1978, pp. 307-311, ainsi que la demande de brevet européen N° 82430003.2 (EP-A N° 0085820) publiée le 17 août 1983.

L'article de IEEE signale la possibilité de coder un signal vocal pour transmission multivitesses par codage en sous-bandes de type VEPC et sélection de sous-bandes. Cet article ne décrit pas le procédé de distribution des moyens de codage entre les sous-bandes et encore moins l'organisation du format des paquets de bits résultant du codage du signal vocal.

Le préambule des revendications indépendantes de la présente demande de brevet sera illustré par l'article ci-dessus.

Pour ce qui est, par ailleurs, de la gestion d'un ensemble de sources en vue de leur concentration sur une même voie (ou canal) de transmission, on a déjà cité les techniques de multiplexage. Ces techniques procèdent en gros par assignation séquentielle et cyclique du canal de transmission à chacune des sources. On en comprend aisément les limitations. La capacité de transmission du canal (nombre de bits par seconde) ne peut en principe être inférieure à la somme des bits que fourniraient les différentes sources en une même seconde. Toutefois, les sources de signaux vocaux présentent la particularité d'avoir des activités intermittentes. Plus précisément, pour une source qui à priori semble active du fait qu'elle est rattachée à un moment donné à une personne engagée dans une conversation, on détecte des alternances de zones de silence ou d'inactivité noyées dans des zones d'activité effective. On a développé des techniques exploitant la présence de ces zones d'inactivité pour associer une même voie de transmission à un groupe de L sources, où L pourrait sembler, à priori, être un nombre excessif. On citera notamment les techniques dites TASI (Time Assignment Speech Interpolation). Un dispositif y est utilisé pour déceler en permanence les sources du groupe qui, à un instant donné, peuvent être considérées en activité effective (selon un critère prédéterminé), et n'allouer le canal de transmission qu'à ces sources. Le nombre L est défini à partir de règles statistiques avec tout ce que cela comporte de risques dans une application pratique. C'est ainsi que, dans des instants d'activité intense, le système de multiplexage de type TASI peut être amené à retarder la transmission des signaux de certaines sources, ou même carrément geler ces sources, autrement dit leur couper la parole. Toutes ces solutions sont naturellement inadmissibles dans un système conversationnel en temps réel.

Enfin, on peut penser à combiner les techniques dites de compression du signal vocal fourni par chacune des sources avec celles du multiplexage de l'ensemble des L sources. Mais il ne faut alors pas qu'aux inconvénients inhérents à chacune des techniques, notamment aux inconvénients cités plus haut, viennent s'ajouter ceux d'une complexité excessive qui rendrait impossible toute exploitation industrielle du système. Parmi les méthodes utilisant ces combinaisons, on peut citer notamment celle proposée par David J. Goodman dans un article publié dans la revue IEEE Transactions on Communications, vol. COM-28, N° 7, juillet 1980, pp. 1040 et suivantes, sous le titre: «Embedded DPCM for Variable Bit Rate Transmission».

Le signal vocal de chacune des sources du système considéré est tout d'abord codé à un taux de bits relativement élevé (taux maximum). Mais les bits obtenus par codage des échantillons de chaque signal vocal sont placés dans le flot de bits à transmettre, selon un ordre pré-établi. Cet ordre est tel que, lorsque l'on désire transmettre le signal déjà codé à un rythme correspondant à un taux de codage inférieur au taux maximum, les opérations à effectuer sont extrêmement simples. Il suffit de supprimer certains bits. Mais le nombre de vitesses de transmission possibles en appliquant les techniques proposées par David J. Goodman est relativement limité, car celles-ci ne peuvent être que des multiples de la fréquence d'échantillonnage du signal.

## Exposé de l'invention

La présente invention a pour objet un procédé simple et efficace de codage numérique d'un signal d'origine vocale.

La présente invention a aussi pour objet un procédé de concentration des signaux d'origine vocale fournis par un groupe de L sources, sur une même voie de transmission par utilisation de techniques de compression et de techniques de multiplexage se combinant entre elles de manière simple.

L'invention a encore pour objet des techniques de concentration permettant d'éviter tout retard ou même gel d'une source quelconque en période de congestion de trafic.

La présente invention procède par traitement, en vue de compression, du signal de chaque source par application de techniques impliquant un découpage de la bande passante du signal vocal correspondant en un nombre donné de sous-bandes et codage des signaux de sous-bandes par répartition dynamique des taux de quantification entre les sous-bandes. Les sous-bandes sont en fait regroupées en sous-groupes dont le nombre est défini en fonction du nombre de vitesses de transmission possibles. Le taux de bits de codage de chaque sous-groupe est défini en fonction d'au moins une desdites vitesses possibles. Les signaux des sous-bandes de chaque sous-groupe sont quantifiés par allocation dynamique des taux de quantification en fonction du taux de bits de codage assigné au sous-groupe. Les bits obtenus par codage des signaux de chaque sous-groupe considérés sur un intervalle de temps donné sont répartis dans une trame répétitive de format comportant des zones prédéterminées, chacune desdites zones étant destinée à recevoir les bits correspondant au codage des signaux fournis par des sous-bandes prédéterminées appartenant au même sous-groupe.

Une fois la vitesse de transmission effective à un instant donné choisie, chaque trame est éventuellement tronquée en conséquence par abandon des bits d'une ou plusieurs zones avant transmission.

Le procédé ci-dessus s'adapte particulièrement bien à une concentration des signaux vocaux issus de plusieurs sources sur une même voie de transmission et ce en attribuant, aux sources les plus actives, les taux de codage les plus élevés. La présente invention se rapporte aussi à un dispositif de mise en œuvre dudit procédé.

D'autres objets, caractéristiques et avantages de la présente invention ressortiront mieux de l'exposé qui suit, fait en référence aux dessins annexés à ce texte, qui représentent un mode de réalisation préféré de celle-ci.

### Brève description des figures

Fig. 1 : un type de codeur de la voix utilisé dans la présente invention.

Fig. 2: mode de réalisation du codeur de la fig. 1 modifié pour les besoins de l'invention.

Fig. 3: format général d'un bloc de bits disposés conformément au procédé de l'invention.

Fig. 4: exemple de bloc de bits selon fig. 3.

Fig. 5: mode de réalisation d'un récepteur utilisé dans l'invention.

Fig. 6: détail d'une partie du récepteur de la fig. 5.

Fig. 7 et 8: mode de réalisation de l'invention.

### Description détaillée de l'invention

Le procédé proposé par David J. Goodman maintient constante la bande passante du signal traité. Autrement dit, pour une transmission à vitesse réduite, alors que le nombre de bits destinés au codage du signal est relativement fiable, ces bits sont toujours utilisés pour coder le même nombre d'échantillons puisque la fréquence de Nyquist n'a pas varié.

Il peut être avantageux d'établir un compromis entre la bande passante réservée au signal à transmettre et le nombre de bits moyen disponible pour le codage de chaque échantillon dudit signal.

On a décrit, dans la demande de brevet européen N° 82430003.2 déposée par la titulaire le 9 février 1982, un procédé permettant d'établir dynamiquement un tel compromis. Ce procédé comporte un arrangement des bits obtenus par codage du signal selon un format prédéterminé judicieusement choisi. Certains principes de base déjà connus sont utilisés dans ledit procédé. Partant des mêmes principes de base, à savoir ceux du codage dit par blocs et en sous-bandes avec allocation dynamique des taux de quantification entre les sous-bandes, on propose ici un nouveau procédé de transmission présentant des avantages dans certaines applications.

Le principe du codage dit par blocs a été décrit dans un article relatant une présentation faite par A. Croisier, au Séminaire international de communications numériques de 1974 à Zurich sous le titre: «Progress in PCM and Delta Modulation: Block Companded Coding of Speech Signal (BCPCM)». A. Croisier propose de coder le signal vocal par tronçons consécutifs de durée judicieusement choisie (par exemple 20 ms). Pour chaque tronçon de signal, un facteur d'échelle (ou terme caractéristique) du signal à coder est défini. Ce terme est fonction de la dynamique du tronçon et sert de référence au codage dudit tronçon. Plus précisément, le signal vocal étant échantillonné à sa fréquence de Nyquist, chaque tronçon de signal fournit un bloc d'échantillons. Le terme caractéristique C doit être tel que le plus grand échantillon du bloc ne tombe pas en dehors des limites du codage durant l'intervalle de temps considéré.

Par exemple, si chaque bloc contient N échantillons, on peut choisir le terme caractéristique C en triant ces N échantillons pour y détecter le plus grand en valeur absolue et attribuer sa valeur à C.

Quant au codage en sous-bandes auquel seront soumis les échantillons de chaque bloc, il a été décrit dans le brevet français N° 77.13995 publié sous le N° 2389277, dans le brevet européen publié sous le N° 0002998 ainsi que dans les présentations faites par D. Esteban *et al.* à la conférence IEEE qui s'est tenue à Tulsa USA du 10 au 12 avril 1978. Les éléments nécessaires à la réalisation de l'invention seront repris ici avec parfois quelques modifications dans les notations qui, bien qu'évidentes, seront éventuellement précisées pour simplifier la tâche du lecteur. En résumé, pour ce qui est du codage en sous-bandes, il faut comprendre que la bande passante du signal vocal est découpée en p sous-bandes. Les échantillons apparaissant dans chaque sous-bande sont quantifiés (ou requantifiés) de manière plus ou moins précise selon l'énergie relative du signal contenu dans ladite sous-bande. Autrement dit, pour un taux de bits de quantification global fixe donné, le taux spécifique alloué à chaque sous-bande variera dans le temps en fonction de l'énergie du signal contenu dans ladite sous-bande.

Comme on le comprendra à la lecture de ce qui suit, le procédé de la présente invention s'applique quel que soit le type de codage en sous-bandes. Il s'applique notamment à un codage en sous-bandes du genre décrit dans le brevet français N° 77.13995, dans lequel l'ensemble de la bande passante du signal vocal à transmettre est scindé en plusieurs sous-bandes. Il s'applique aussi à un codage en sous-bandes dans lequel seule une bande dite de base du signal vocal à transmettre est scindée en sous-bandes. Un mode de réalisation d'un codeur de ce dernier type a été décrit dans le brevet européen N° 0002998 déjà cité. Un mode de réalisation semblable de ce même type de codeur a aussi été décrit par D. Esteban *et al.* à la conférence de Tulsa sous le titre «9.6/7.2 Kbps Voice Excited Predictive Coder (VEPC)».

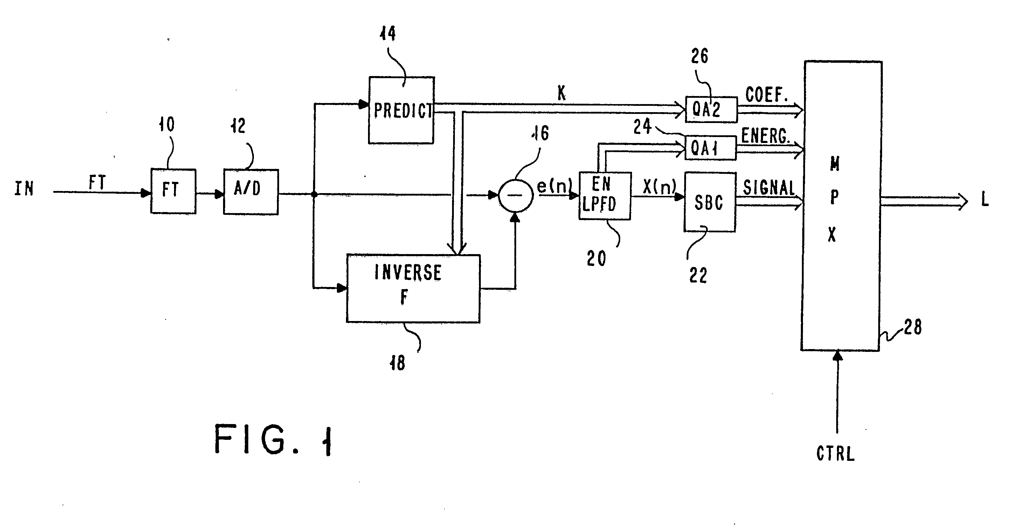

On a représenté sur la fig. 1 un codeur du type VEPC. Le signal vocal est appliqué sur l'entrée IN du codeur. Il est filtré en 10 à l'aide d'un filtre passe-bas transmettant à un convertisseur analogique-numérique 12 un signal compris dans la bande de fréquence dite téléphonique (fréquences $\leqslant 3400$ Hz). Ce signal est échantillonné à 8 kHz et codé en PCM à 12 bits. Les échantillons codés sont ensuite recodés. Pour ce faire, ils sont envoyés à la fois dans un prédicteur de paramètres 14, dans un soustracteur 16 et dans un filtre inverse 18. Le prédicteur 14 déduit du signal qu'il reçoit un groupe de coefficients dits d'autocorrélation partielle ou PARCOR (K) servant à ajuster le filtre inverse 18 pour une durée inférieure ou égale à 20 ms. Le filtre inverse est réalisé selon le réseau maillé tel qu'il a été défini par J.D. Markel *et al.* dans leur ouvrage intitulé: «Linear Prediction of Speech» au paragraphe 5.4. Le signal fourni par le filtre inverse 18 représente en fait la partie prévisible du signal vocal. Le soustracteur 16, retranchant du signal fourni par le convertisseur 12 le signal issu du filtre inverse 18, fournit un signal dit résiduel $e_{(n)}$ dépourvu d'une partie de la redondance du signal vocal d'origine. Le signal résiduel $e_{(n)}$ est filtré en 20. Le dispositif 20 fournit, d'une part, les échantillons X(n) d'un signal dit résiduel en bande de base limité à une fréquence $\leqslant 2$ kHz par exemple et, d'autre part, une information relative à l'énergie du signal contenu dans la bande de fréquences hautes éliminée. Le signal résiduel en bande de base est soumis à un codage en sous-bandes dans un dispositif 22. Ce dernier dispositif procède à une requantification de type à allocation dynamique des bits de quantification et délivre une information désignée par SIGNAL. L'énergie de la bande de fréquences hautes (1625-3400 Hz par exemple) est requantifiée en 24 pour fournir une information désignée en ENERG (ou E). Quant aux coefficients d'autocorrélation partielle dits aussi coefficients PARCOR, ils sont recodés par requantification en 26 pour fournir une information désignée par COEF (ou K). Ces trois types d'informations, à savoir COEF (K), ENERG (E) et SIGNAL, constituent une représentation codée caractérisant pleinement le signal vocal soumis à l'entrée IN du codeur. Leur transmission sur une ligne L est réalisée à l'aide d'un multiplexeur 28. On rappellera tout d'abord que, le système travaillant en BCPCM, le traitement du signal vocal se fait sur des blocs de N échantillons représentant des tronçons de signal consécutifs de 20 millisecondes (ms).

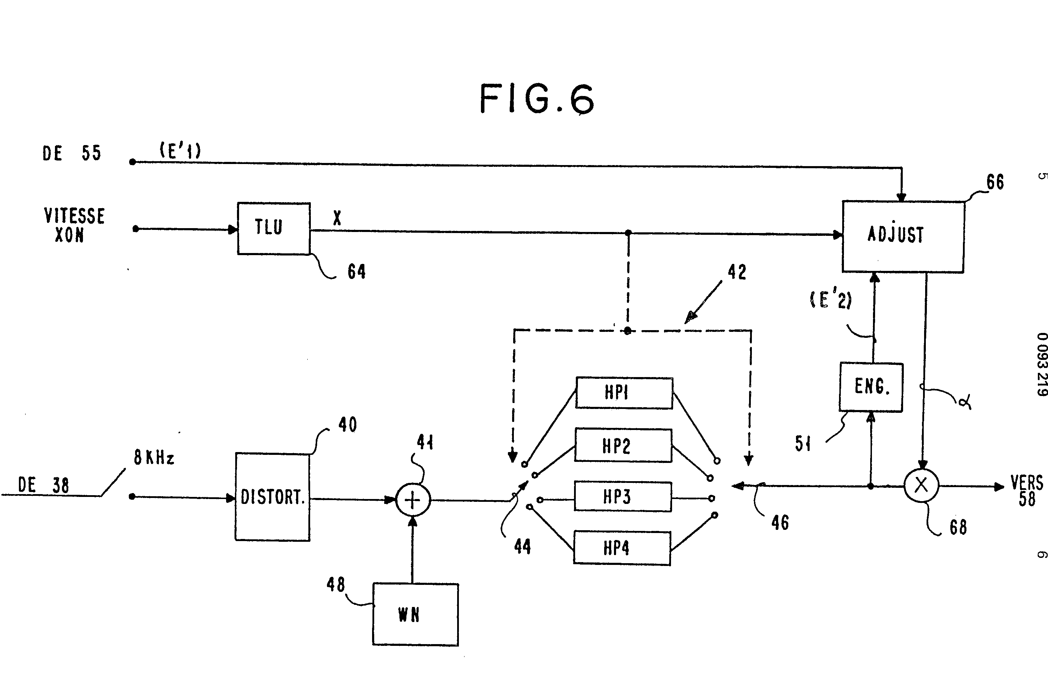

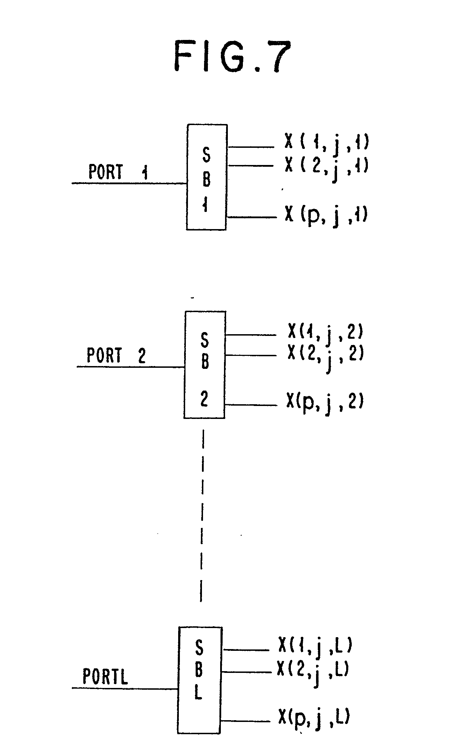

Le dispositif 14 prédicteur de paramètres a été décrit en détail notamment dans le brevet européen N° 0002998 et plus précisément aux fig. 6 et 7 dudit brevet. La méthode sur laquelle est basée le dispositif met notamment en œuvre les algorithmes proposés par J. Le Roux et C. Guegen dans un article publié dans «IEEE Transactions on Acoustics, Speech and Signal Processing» de juin 1977.

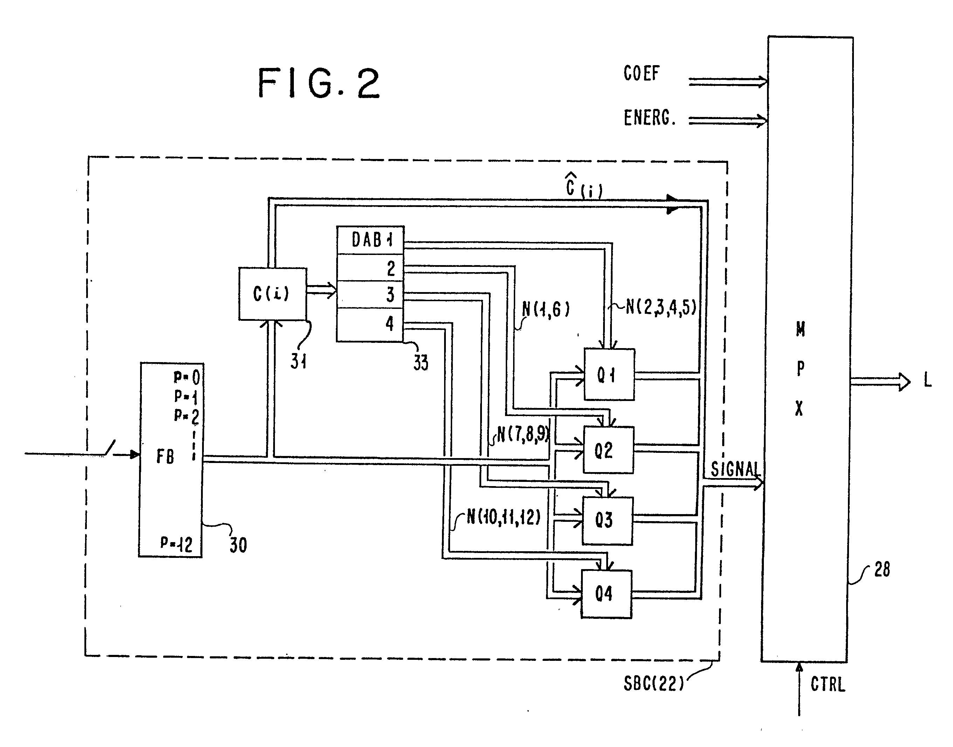

Le dispositif 20 comporte un filtre numérique passe-bas dont la fréquence limite supérieure est ⩽ 2000 Hz. On verra plus loin que, dans le cas pratique décrit, cette fréquence supérieure sera limitée à 1625 Hz. Le dispositif 20 comporte en outre les moyens permettant de mesurer l'énergie E contenue dans la bande hautes fréquences 1625-3400 Hz éliminée par le filtre passe-bas du dispositif 20. Un mode de réalisation du dispositif 20 a été décrit dans le brevet européen N° 0002998 (voir notamment la fig. 2 dudit brevet). L'information dite d'énergie de bande haute du signal résiduel est quantifiée en 24 et ce toutes les 10 ms, c'est-à-dire deux fois par tronçon de signal de 20 ms.

Les échantillons X(n) du signal résiduel en bande de base sortent du filtre passe-bas 20 à une fréquence de 4 kHz. Le signal résiduel en bande de base est soumis dans le codeur 22 à un recodage de type BCPCM en sous-bandes avec allocation dynamique des taux de bits de quantification entre les sous-bandes. Ce type de codage a été décrit dans les documents cités plus haut.

On rappellera simplement quelques règles. Soit p le nombre de sous-bandes entre lesquelles la bande passante du signal à recoder est divisée. Soit N le nombre d'échantillons dans chaque sous-bande durant un intervalle de 20 ms correspondant à un tronçon de signal à recoder en BCPCM. Soit enfin $X(i, j)$ le $j^{ième}$ échantillon d'un bloc de N échantillons de la $i^{ième}$ sous-bande. Pour chaque tronçon de signal de sous-bande, le terme caractéristique de sous-bande $C(i)$ est déterminé, qui obéit à la relation:

$$C(i) = \text{Max } (|X(i, j)|) \qquad (1)$$
$$j = 1, \ ..., \ N$$

Cela revient à trier les échantillons de chaque bloc de manière à en déterminer le plus grand en valeur absolue et attribuer cette valeur à $C(i)$. On obtient ainsi p termes caractéristiques $C(1)$, $C(2)$, ..., $C(p)$. Ces termes sont éventuellement requantifiés par consultation d'une table logarithmique de manière à réduire autant que possible le nombre de bits réservés au codage des $C(i)$. Les termes $C(i)$ recodés peuvent être désignés par $\tilde{C}(i)$.

D'autre part, les échantillons $X(i, j)$ sont eux-mêmes (re)quantifiés de manière telle que le pas de (re)quantification correspondant soit défini en fonction de la sous-bande à laquelle l'échantillon traité appartient ou plus précisément en fonction de l'énergie relative contenue dans ladite sous-bande par rapport aux énergies contenues dans les autres sous-bandes durant le même intervalle de temps. On montre que, pour un taux de bits de (re)quantification M exprimé par période d'échantillonnage de sous-bandes et destiné à la (re)-quantification des échantillons des p sous-bandes, le rapport signal/bruit de quantification global est minimisé en affectant, à la requantification de la $i^{ième}$ sous-bande, un nombre de bits $n(i)$ obéissant à la relation:

$$n(i) = \frac{1}{p} [M - \sum_{j=1}^{p} \log C(j)] + \log C(i) \qquad (2)$$

où i = 1, 2, ..., p

et
$$\sum_{i=1}^{p} n(i) = M \qquad (3)$$

ce qui revient à dire que les taux de (re)quantification sont alloués dynamiquement.

En pratique, l'égalité (3) n'est jamais directement vérifiée sans quelques réajustements tels que décrits dans les documents de l'art antérieur cités plus haut.

Plus précisément, si on désigne par $\tilde{C}(i)$ les termes résultant d'un décodage des $\tilde{C}(i)$, en pratique, l'expression (2) est remplacée par

$$n(i) = \frac{1}{p} [M - \sum_{j=1}^{p} \log \tilde{C}(j)] + \log \tilde{C}(i) \qquad (4)$$

On verra plus loin que, en fait, pour les besoins de la présente invention, les sous-bandes sont regroupées en plusieurs sous-groupes et que le nombre M, donc le taux de quantification, varie d'un sous-groupe à un autre. Le nombre de sous-groupes est défini en fonction du nombre de vitesses prédéterminées auxquelles on se propose de pouvoir transmettre. On a choisi le groupe de vitesses 2, 4; 4, 8; 7,2; 9, 6 et 12 Kbps. Toutes les 20 ms, on disposera donc d'un nombre de bits de codage différent, à savoir 48 bits pour une transmission à 2,4 Kbps; 96 bits pour 4,8 Kbps; 144 bits pour 7,2 Kbps; 192 bits pour 9,6 Kbps et 240 bits pour 12 Kbps. Une fois retranchés les bits réservés au codage des énergies (E), des coefficients PARCOR (K) et des termes caractéristiques, on connaît le nombre de bits destinés à la requantification des échantillons proprement dit. Les répartitions choisies sont résumées sur le tableau I. On notera que certains bits sont mis en réserve. On notera aussi le terme macro-échantillon par lequel on désigne l'ensemble des échantillons des sous-bandes d'un sous-groupe donné considérées à un même instant d'échantillonnage.

*(Tableau en page suivante)*

On a représenté sur la fig. 2 un mode de réalisation du codeur 22 en sous-bandes modifié pour permettre sa mise en application dans le cadre de la présente invention. Le codeur 22 comporte tout

*Tableau I*

| Vitesses (Kbps) | 2,4 | 4,8 | 7,2 | 9,6 | 12 |
|---|---|---|---|---|---|
| Bande passante (Hz) par sous-groupe | 125 | 250-750 | 125-875 | 125-1250 | 125-1625 |
| Nombre de bits de codage disponibles/20 ms | 48 | 96 | 144 | 192 | 240 |
| Nombre de sous-bandes par sous-groupe | 1 | 4 | 6 | 9 | 12 |
| Nombre de bits C(i) | 4+2 | 16+2 | 24+2 | 36+2 | 48+2 |
| Nombre de bits/énergie d'un bloc | 4 | 8 | 8 | 8 | 8 |
| Nombre de bits/K | 28 | 28 | 28 | 28 | 28 |
| Nombre de bits/20 ms d'échantillons (taux de codage de sous-groupe) | 10 | 40 | 80 | 115 | 150 |
| Nombre de bits par macro-échantillon | 2 | 8 | 16 | 23 | 30 |
| Nombre de bits utilisés par 20 ms | 48 | 94 | 142 | 189 | 236 |
| Nombre de bits réserve | 0 | 2 | 2 | 3 | 4 |

d'abord un banc de filtres 30 (FB) découpant la bande passante du signal résiduel en bande de base en 12 sous-bandes adjacentes se répartissant selon le tableau II ci-dessous:

*Tableau II*

| Rang (j) de sous-bande | Fréquences limites (Hz) | Groupage |
|---|---|---|
| 0 | 0-0125 | |
| 1 | 125-0250 | |
| 2 | 250-0375 | |
| 3 | 375-0500 | DAB1 2,4 et 4,8   DAB2 7,2   DAB3 9,6   DAB4 12 |
| 4 | 500-0625 | |
| 5 | 625-0750 | |
| 6 | 750-0875 | |
| 7 | 875-1000 | |
| 8 | 1000-1125 | |
| 9 | 1125-1250 | |
| 10 | 1250-1375 | |
| 11 | 1375-1500 | |
| 12 | 1500-1625 | |

Le banc de filtre 30 utilise des cellules de filtres demi-bande en quadrature tels que décrits dans l'«IBM Technical Disclosure Bulletin», vol. 19, N° 9 (février 1977), pp. 3438-39.

La sous-bande allant de 0 à 125 Hz n'est pas utilisée. Les autres sous-bandes sont groupées en sous-groupes conformément aux indications des tableaux I et II, pour être soumises à des dispositifs DAB1 à DAB4 déterminant les allocations dynamiques de bits, donc les pas de quantification à utiliser pour chacun des macro-échantillons concernés. Plus précisément, chaque sous-groupe correspond à au moins une des vitesses de transmission possibles. La vitesse de transmission la plus élevée de chaque sous-groupe détermine le taux du bit de codage du sous-groupe.

Le dispositif DAB1 traite les sous-bandes 2 à 5 regroupées en un premier sous-groupe SG1. DAB1 calcule, à partir des termes C(i) qui lui sont fournis par un générateur de 5(i) 31, l'allocation dynamique d'un taux de bits donné fixé ici à M1 = 8 bits par macro-échantillon sur lesdites sous-bandes 2 à 5.

Si on désigne par:

$$\beta_1 = \frac{1}{4}\left(8 - \sum_{j=2}^{5} \log \tilde{C}(j)\right) \tag{5}$$

le nombre de bits de quantification N(i) à allouer dynamiquement aux sous-bandes du sous-groupe SG1 est:

$$N(i) = \beta_1 + \log \tilde{C}(i) \qquad (6)$$

pour i = 2, 3, 4 et 5.

DAB2 calcule l'allocation dynamique de 8 bits additionnels sur les sous-bandes 1 et 6 (rajoutées au sous-groupe SG1 pour former le sous-groupe SG2) pour lesquelles

$$\beta_2 = \frac{1}{2} (8 - \log \tilde{C}_1 - \log \tilde{C}_6) \qquad (7)$$

$$N(1) = \beta_2 + \log \tilde{C}_1 \qquad (8)$$

$$N(6) = \beta_2 + \log \tilde{C}_6 \qquad (9)$$

DAB3 calcule l'allocation de 7 bits additionnels sur les sous-bandes 7, 8, 9 (à rajouter à SG2 pour obtenir le sous-groupe SG3)

$$\beta_3 = \frac{1}{3} (7 - \sum_{j=7}^{9} \log \tilde{C}(j)) \qquad (10)$$

$$N(i) = \beta_3 + \log \tilde{C}(i) \qquad i = 7,8,9 \qquad (11)$$

Enfin, DAB4 alloue dynamiquement 7 bits additionnels aux sous-bandes 10, 11, 12 (à rajouter à SG3 pour obtenir le sous-groupe SG4)

$$\beta_4 = \frac{1}{3} (7 - \sum_{j=10}^{12} \log C(j)) \qquad (12)$$

$$N(i) = \beta_4 + \log \tilde{C}(i) \qquad i = 10,11,12 \qquad (13)$$

Les circuits DAB1 à DAB4 ont été regroupés sur la fig. 2 en un allocateur dynamique de bits 33.

En pratique, chacun des $N(i)$ calculé devra être ajusté à une valeur entière telle que la somme des $N(i)$ déterminés par chacun des dispositifs DAB1 à DAB4 soit égale au nombre prédéterminé choisi. Cet ajustement se fait par la technique déjà utilisée et décrite dans les références citées plus haut. La somme des $N(i)$ pour les 12 sous-bandes est égale à 30 par macro-échantillon, c'est-à-dire au nombre de bits par macro-échantillon défini pour une transmission à la vitesse la plus élevée (voir tableau I). Les allocations dynamiques de bits de (re)quantification à 2400 bps (sous-groupe SG0) n'ont pas été décrites ci-dessus. On verra plus loin que cette vitesse de transmission est traitée de façon particulière.

Une fois défini le taux de bits alloué à la quantification de chaque sous-bande, les échantillons de signal sont requantifiés en Q1 à Q4. Les bits d'échantillons requantifiés sont ensuite disposés selon un format que l'on va décrire en se basant sur un exemple.

L'ensemble 31, 33, Q1, Q2, Q3, Q4 regroupe donc les sous-bandes en sous-groupes et requantifie les signaux de chaque sous-bande en fonction du sous-groupe auquel ladite sous-bande appartient.

On va supposer, à titre d'exemple, que les dispositifs DAB1 à DAB4 fournissent les valeurs suivantes:

| | |
|---|---|
| DAB1 (du sous-groupe SG1) | $N(2) = 2$ $N(3) = 1$ $N(4) = 2$ $N(5) = 3$ |
| DAB2 (du sous-groupe SG2) | $N(1) = 5$ $N(6) = 3$ |
| DAB3 (du sous-groupe SG3) | $N(7) = 1$ $N(8) = 4$ $N(9) = 2$ |
| DAB4 (du sous-groupe SG4) | $N(10) = 2$ $N(11) = 4$ $N(12) = 1$ |

On note que $\sum_{i=1}^{12} N(i) = 30$.

Ces taux de $N(i)$ servent à régler les pas de requantification des requantificateurs 1 à 4 qui traitent les échantillons des sous-groupes SG1 à SG4 respectivement. Le pas de requantification $Q(i)$ de la $i^{\text{ème}}$ sous-bande est tel que:

$$Q(i) = \tilde{C}(i) / 2^{N(i)-1}$$

Les échantillons requantifiés $\hat{X}(i,j)$ obéissent à la relation:

$$\hat{X}(i, j) = !! X(i, j) / Q(i) !! \qquad (14)$$

où le symbole $!!.!!$ indique que les valeurs obtenues sont tronquées aux valeurs entières immédiatement inférieures.

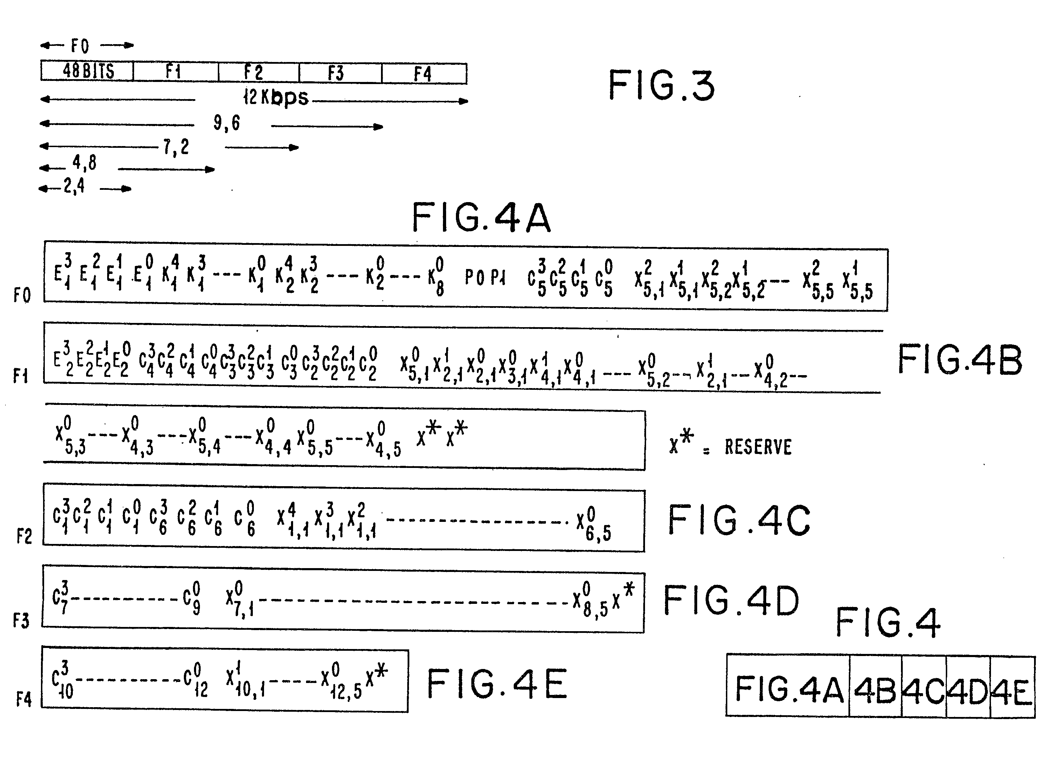

Les bits résultant du codage de chaque tronçon de 20 ms de signal sont répartis par le multiplexeur 28 au sein d'une trame (voir fig. 3) comportant plusieurs zones (F0, F1, ...). On obtient ainsi toutes les 20 ms un bloc de bits répartis selon une tame multitaux. On note, pour l'exemple choisi, cinq zones désignées par F0, F1, F2, F3 et F4. Selon la vitesse de transmission désirée, on transmettra une portion (nombre de zones) plus ou moins grande du bloc (ou trame) multitaux.

Soient:

$X^p_{(i,j)}$ = le $p^{\text{ème}}$ bit du $j^{\text{ème}}$ échantillon requantifié de la $i^{\text{ème}}$ sous-bande.
p = 0 représente le bit le moins significatif, c'est-à-dire celui de poids le plus faible.

$C^p_{(i)}$ = représente le $p^{\text{ème}}$ bit de la caractéristique codée de la $i^{\text{ème}}$ sous-bande.

$E_1, E_2$ = sont les deux valeurs d'énergies (canal ENERG) déterminées pour chaque tronçon de 20 ms de signal d'origine vocale à coder. Les termes $E_1$ et $E_2$ sont codés en $QA_1$ avec quatre bits chacun. $E^p_1$ et $E^p_2$ sont les $p^{\text{ème}}$ bits de $E_1$ et $E_2$.

$K^p_\ell$ = avec $\ell = 1, 2, ..., 8$, représente le $p^{\text{ème}}$ bit du $\ell^{\text{ème}}$ coefficient PARCOR défini pour le tronçon de signal.

Les coefficients PARCOR sont codés en QA2 selon la méthode décrite dans «Piecewise Linear Quantization of LPC Reflection Coefficients» décrite par C. Un et S. Yang dans le document de l'«International Conference on Acoustics, Speech and Signal Processing (ICASSP)», Hartford 1977, pp. 417 à 420. Plus précisément, on a réservé 28 bits aux coefficients PARCOR (voir tableau I) répartis comme suit:

$K_1$:     5 bits
$K_2$:     5 bits
$K_3$ à $K_8$: 3 bits chacun

On a indiqué plus haut que l'on réservait un traitement spécial à la vitesse 2400 bps. Dans ce cas, on ne conserve qu'une seule sous-bande, à savoir celle contenant le plus d'énergie parmi les sous-bandes 2, 3, 4 et 5 (sous-groupe 1). De plus, seuls les deux bits de poids les plus forts des échantillons de cette sous-bande fournis par le quantificateur Q1 sont retenus. La position de la sous-bande concernée est définie par deux bits notés P0 et P1 et obéissant au tableau III.

*Tableau III*

| P0 | P1 | Sous-bande |
|----|----|------------|
| 0 | 0 | 2 |
| 0 | 1 | 3 |
| 1 | 0 | 4 |
| 1 | 1 | 5 |

Pour l'exemple cité plus haut, ce sont les deux bits de poids les plus élevés de chaque échantillon de la sous-bande 5 qui seront retenus. Les bits de la zone F0 seront dans le cas présent:

$$X_{5,1}^2 \quad X_{5,2}^2 \quad X_{5,3}^2 \quad X_{5,4}^2 \quad X_{5,5}^2$$

$$X_{5,1}^1 \quad X_{5,2}^1 \quad X_{5,3}^1 \quad X_{5,4}^1 \quad X_{5,5}^1$$

De plus, pour cette transmission à 2400 bps, on ne retiendra qu'une valeur d'énergie hautes-fréquences, à savoir la première, $E_1$.

La zone F0 contient donc:

$$X_{5,j}^2 \quad\quad j=1, ..., 5$$

$$X_{5,j}^1 \quad\quad j=1, ..., 5$$

P0, P1

$$E_1^3 \quad E_1^2 \quad E_1^1 \quad E_1^0$$

$$C_5^3 \quad C_5^2 \quad C_5^1 \quad C_5^0$$

$$K_1^4 \quad K_1^3 \quad K_1^2 \quad K_1^1 \quad K_1^0$$

$$K_2^4 \quad K_2^3 \quad K_2^2 \quad K_2^1 \quad K_2^0$$

$$K_3^2 \quad K_3^1 \quad K_3^0$$

$$K_4^2 \quad K_4^1 \quad K_4^0$$

$$K_5^2 \quad K_5^1 \quad K_5^0$$

$$K_6^2 \quad K_6^1 \quad K_6^0$$

$$K_7^2 \quad K_7^1 \quad K_7^0$$

$$K_8^2 \quad K_8^1 \quad K_8^0$$

Ces bits sont répartis selon le schéma de la fig. 4A représentant la zone F0 du bloc multitaux, c'est-à-dire la zone correspondant à la vitesse de transmission à 2400 bps.

La zone F1 représentée sur la fig. 4B contient:

$$C_4^3 \quad C_4^2 \quad C_4^1 \quad C_4^0$$

$$C_3^3 \quad C_3^2 \quad C_3^1 \quad C_3^0$$

$$C_2^3 \quad C_2^2 \quad C_2^1 \quad C_2^0$$

$$E_2^3 \quad E_2^2 \quad E_2^1 \quad E_2^0$$

$$X_{5,j}^0 \quad\quad j=1, ..., 5$$

$$X_{2,j}^1 \quad\quad j=1, ..., 5$$

$$X_{2,j}^0 \quad\quad j=1, ..., 5$$

$$X_{3,j}^0 \quad\quad j=1, ..., 5$$

$$X_{4,j}^1 \quad\quad j=1, ..., 5$$

$$X_{4,j}^0 \quad\quad j=1, ..., 5$$

et deux bits de réserve (non utilisés lors du décodage ultérieur du signal à la réception).

La zone F2 représentée sur la fig. 4C contient:

$$C_1^3 \quad C_1^2 \quad C_1^1 \quad C_1^0$$

$$C_6^3 \quad C_6^2 \quad C_6^1 \quad C_6^0$$

$$X_{1,j}^4 \quad\quad j=1, ..., 5$$

$$X_{1,j}^3 \quad\quad j=1, ..., 5$$

$$X_{1,j}^2 \quad\quad j=1, ..., 5$$

$$X_{1,j}^1 \quad\quad j=1, ..., 5$$

$$X_{1,j}^0 \quad\quad j=1, ..., 5$$

$$X_{6,j}^2 \quad\quad j=1, ..., 5$$

$$X_{6,j}^1 \quad\quad j=1, ..., 5$$

$$X_{6,j}^0 \quad\quad j=1, ..., 5$$

La zone F2 contient donc les bits des sous-bandes (1 et 6) à rajouter aux sous-groupes correspondant à la vitesse immédiatement inférieure (2400 bps) pour former le sous-groupe suivant (4800 bps).

On procédera de même pour les zones suivantes F3 et F4.

La zone F3 représentée sur la fig. 4D contient:

$$C_7^3 \quad C_7^2 \quad C_7^1 \quad C_7^0$$

$$C_8^3 \quad C_8^2 \quad C_8^1 \quad C_8^0$$

$$C_9^3 \quad C_9^2 \quad C_9^1 \quad C_9^0$$

$$X_{7,j}^0 \qquad j=1, ..., 5$$

$$X_{8,j}^3 \qquad j=1, ..., 5$$

$$X_{8,j}^2 \qquad j=1, ..., 5$$

$$X_{8,j}^1 \qquad j=1, ..., 5$$

$$X_{8,j}^0 \qquad j=1, ..., 5$$

$$X_{9,j}^1 \qquad j=1, ..., 5$$

$$X_{9,j}^0 \qquad j=1, ..., 5$$

Cette zone comportera un bit de réserve supplémentaire.

Enfin, la zone F4 représentée sur la fig. 4E contient:

$$C_{10}^3 \quad C_{10}^2 \quad C_{10}^1 \quad C_{10}^0$$

$$C_{11}^3 \quad C_{11}^2 \quad C_{11}^1 \quad C_{11}^0$$

$$C_{12}^3 \quad C_{12}^2 \quad C_{12}^1 \quad C_{12}^0$$

$$X_{10,j}^1 \qquad j=1, ..., 5$$

$$X_{10,j}^0 \qquad j=1, ..., 5$$

$$X_{11,j}^3 \qquad j=1, ..., 5$$

$$X_{11,j}^2 \qquad j=1, ..., 5$$

$$X_{11,j}^1 \qquad j=1, ..., 5$$

$$X_{11,j}^0 \qquad j=1, ..., 5$$

$$X_{12,j}^0 \qquad j=1, ..., 5$$

Cette zone comportera encore un bit de réserve supplémenaire.

Les bits obtenus en sortie des dispositifs de quantification Q1 à Q4 sont multiplexés en 28 selon le format de bloc multitaux comportant les zones F0 à F4. Une fois choisie la vitesse de transmission, une commande est appliquée au multiplexeur 28 par la ligne CTRL. Cette commande sert à tronquer, si besoin, chaque bloc ou trame multitaux aux dimensions requises avant transmission sur la ligne L reliée au multiplexeur 28.

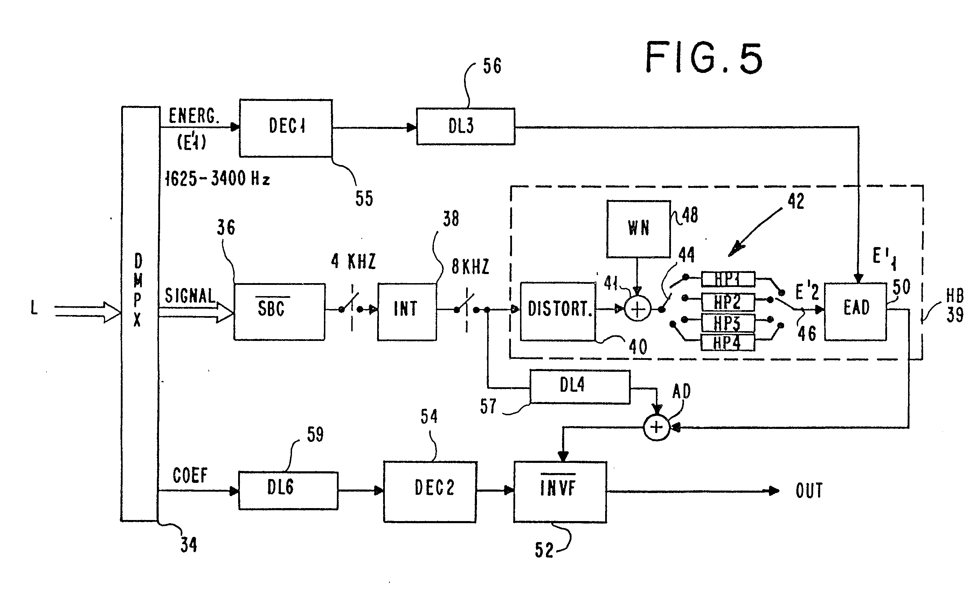

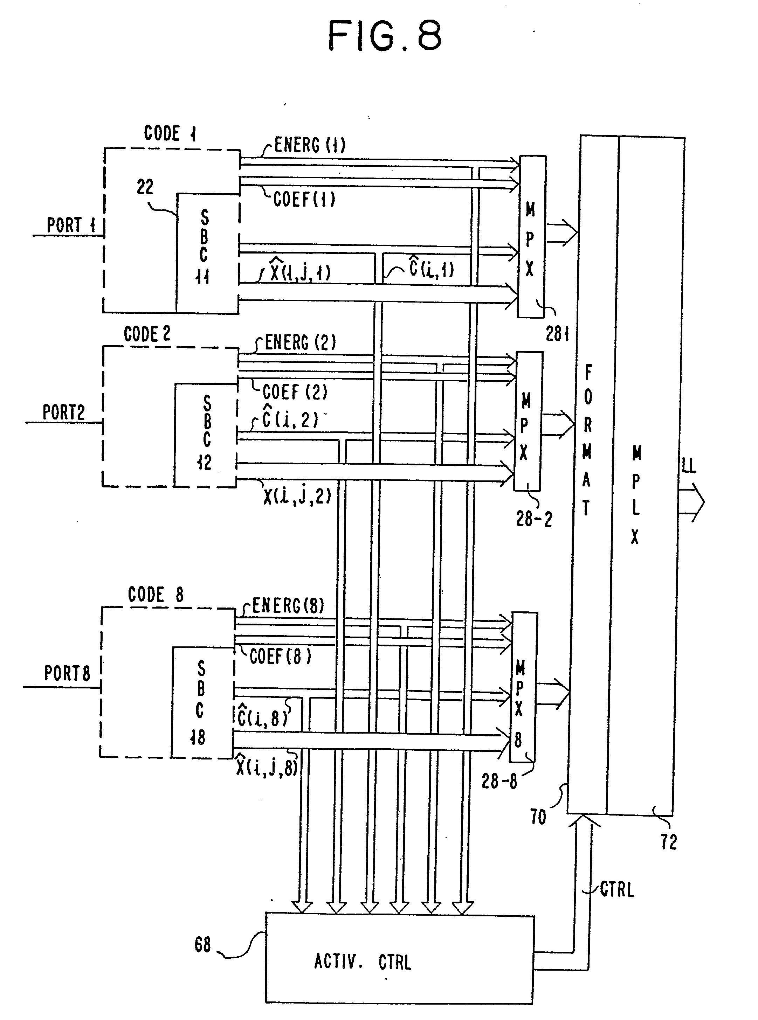

On a représenté sur la fig. 5 un schéma de récepteur de type VEPC semblable à celui de l'art antérieur (voir notamment les fig. 8 à 11 du brevet européen N° 0002998) modifié pour les besoins de la présente invention. Les données arrivant sur la ligne d'entrée L sont tout d'abord démultiplexées en 34 (DMPX). Le démultiplexeur 34 sépare les informations des canaux ENERG (E), SIGNAL et COEF (K) les unes des autres.

L'information SIGNAL est tout d'abord décodée en 36 (SBC) de manière à restituer les échantillons du signal résiduel en bande de base. Ces échantillons sont soumis en 36 à des opérations de quantifications inverses associées à des opérations de filtrage et interpolation destinées à recombiner les sous-bandes en la bande de base d'origine. Le filtrage est réalisé à l'aide d'éléments H'$_1$ et H'$_2$ qui sont des filtres demi-bande en quadrature respectivement passe-haut et passe-bas. L'interpolation est obtenue en intercalant un zéro entre deux échantillons d'entrée consécutifs. On additionne ensuite les sorties des filtres pris deux à deux. Pour plus de détail, on se reportera aux références citées.

La fréquence d'échantillonnage de signal de bande de base est ramenée à 8 kHz par un interpolateur 38 (INT). Ce dispositif calcule les échantillons intermédiaires à placer entre deux échantillons consécutifs à 4 kHz, l'interpolation peut être réalisée par l'intermédiaire d'un filtre. Le trajet du signal sortant de l'interpolateur est scindé en deux voies, l'une directe, l'autre indirecte. La voie indirecte comprend un générateur de bande haute 39 (HB) dans lequel on opère un étalement du spectre de la bande basse, par distorsion non linéaire en 40 (DISTORT), les extractions des bandes hautes par filtrage en 42 et modulation en EAD de la bande haute utilisée par l'information d'énergie fournie par le canal ENERG recevant les informations d'énergie E et les décodant en 55 (DEC 1). Suivant le débit en entrée du récepteur, on connaît la limite supérieure de la bande de base (voir tableau II). La bande hautes fréquences dépend donc de la vitesse de transmission retenue. Le filtre passe-haut 42 doit être choisi en conséquence. Plus précisément, pour 2400 et 4800 bps, la bande passante du filtre 42 est fixée à 750-3400 Hz; pour 7200 bps, elle est fixée à 875-3400 Hz; pour 9600 bps et 12000 bps, elle est respectivement fixée à 1250-3400 Hz et 1625-3400 Hz. C'est la raison pour laquelle le filtre 42 est constitué par un ensemble de quatre filtres passe-bande désignés par HP1 à HP4 associés à des commutateurs 44 et 46. L'information sur la vitesse de transmission, déterminée par exemple en appliquant les méthodes traditionnelles de type SDLC, sert à choisir le filtre à utiliser. En pratique, les filtres HP1 à HP4 seront de type transversal de même ordre et utiliseront la même ligne à retard.

En outre, comme certains sons, les fricatifs par exemple, fournissent un niveau d'énergie très faible en bande basse, l'énergie du signal fournie par le dispositif 40 (DISTORT) risque d'être insuffisante pour les besoins du décodeur de l'invention. On a donc rajouté à la sortie du dispositif 40 (DIST), une énergie fournie par un générateur de bruit blanc 48 (WN). Le niveau de cette énergie doit être réglé de manière qu'elle assure ses fonctions pour les sons à énergie faible en bande basses fréquences, sans perturber le fonctionnement lors du traitement de sons voisés. Il faut pour cela que le bruit blanc ait une amplitude faible par rapport à l'énergie de la bande haute des sons voisés. Le réglage de WN peut être réalisé empiriquement ou dynamiquement. Le signal résultant de l'adjonction du bruit blanc à l'information issue du dispositif 40 (DISTORT) passe à travers un des filtres passe-bande 42 opérant l'extraction de la bande hautes fréquences concernée.

Les échantillons sortant du filtre 42 sont introduits dans le dispositif 50 d'ajustement d'énergie (EAD) qui normalise le niveau de la bande haute. Cette normalisation est obtenue par mesure à l'aide d'un dispositif ENF (51) de l'énergie E'2 du signal issu du filtre 42, comparaison de E'2 avec l'énergie E'1, où E'1 désigne E1 et/ou E2 issu du décodeur DEC 1 placé sur le canal ENERG véhiculant les termes E représentant l'énergie dans la bande de fréquences 1 625-3 400 Hz, et finalement modulation du signal issu du filtre 42 par le résultat de cette comparaison. La sortie du dispositif 50 est rajoutée à la sortie de l'interpolateur 38 en AD. Le signal résultant est filtré par un filtre numérique 52 ($\overline{INVF}$) de type treillis ayant pour coefficients les termes PARCOR fournis par le canal COEF et décodé en 54 (DEC 2).

On notera que l'on a rajouté, dans les différentes branches du récepteur de la fig. 5, des éléments à retard 56 (DL3), 57 (DL4) et 59 (DL6) destinés à remettre les informations desdites branches en synchronisme les unes par rapport aux autres.

On a représenté sur la fig. 6 un mode de réalisation du circuit 39 (HB) de la fig. 5. On remarquera tout d'abord que l'information indiquant la vitesse de transmission utilisée sert à adresser une table 64 fournissant en sortie l'indication du filtre HP1 à HP4 à utiliser. Cette information commande les commutateurs 44 et 46. La table 64 indique en outre la valeur Xbb de la fréquence inférieure de la bande passante du filtre HP1 à HP4 sélectionné. Cette information est envoyée dans un circuit d'ajustement 66 relié par ailleurs au décodeur 55 lui fournissant un paramètre E'1 et au dispositif ENG 51 lui fournissant E'2. Le circuit d'ajustement 66 calcule un terme α tel que

$$\alpha = \sqrt{\frac{3400-Xbb}{3400-1625} \cdot \frac{E'1}{E'2}}$$

Le terme α sert à moduler en 68 l'information sortant du filtre 42.

Les procédés de codage en sous-bandes, et notamment celui décrit en détail ci-dessus, se prêtent particulièrement bien à la concentration des signaux vocaux de plusieurs sources sur une même voie de transmission.

On a représenté sur la fig. 7 le schéma de principe d'un dispositif destiné à desservir L sources respectivement connectées à des portes désignées par PORT1 à PORTL.

Si on désigne par SB1, SB2, ..., SBL les bancs de filtres appartenant à des codeurs en sous-bandes traitant respectivement les signaux des portes 1 à L, on obtient une distribution d'échantillons de sous-bandes telle que représentée sur la fig. 7.

Un codage par allocation dynamique optimale des bits de quantification des signaux des différentes portes peut être réalisé de manière globale sur l'ensemble des p · L signaux de sous-bandes. Pour ce faire, on pourra réaliser les opérations suivantes:

— Détermination des caractéristiques

$$C(i, k) = \underset{j=1,N}{Max} \ (|X(i, j, k)|)$$

pour i=1, ..., p
  k=1, ..., L

— Codage des caractéristiques.
— Contrôle d'activité des portes et allocation dynamique des bits de (re)quantification des signaux de sous-bandes de manière telle que:

$$n(i,k) = \frac{1}{p \cdot L} [M \cdot L - \sum_{j=1}^{p} \sum_{k=1}^{L} \log \tilde{C}(j, k)] + \log \tilde{C}(i, k)$$

(15)

pour i=1, ..., p
  k=1, ..., L          (16)

avec en plus la contrainte:

$$\sum_{k=1}^{L} \sum_{i=1}^{p} n(i, k) = M \cdot L \qquad (17)$$

— Ajustement des n(i, k) en les tronquant à la valeur entière la plus proche. Ces valeurs entières seront limitées à un nombre prédéterminé de valeurs telles que 0, 1, 2, 3, 4, 5 par exemple. Puis on ajustera les valeurs de n(i, k) de manière telle que les expressions (15) à (17) soient vérifiées.
— (Re)quantification des échantillons de chaque sous-bande.

Ce procédé présente l'avantage de fournir un moyen de codage par allocation dynamique s'étendant de manière optimale à l'ensemble des p · L sous-bandes. Il peut cependant présenter quelques inconvénients lorsqu'on désire l'appliquer à un système de type TASI.

On va décrire ici un procédé de concentration des signaux de L portes, sur une même voie de transmission, particulièrement intéressant et basé sur l'application des principes du codage multitaux décrit plus haut.

Ce procédé comporte les étapes suivantes:
— Codage de l'information vocale fournie par chaque source en appliquant les techniques de codage multitaux décrites plus haut.
— Mesure de l'activité relative de chaque source.
— Déduction d'un taux de codage à allouer à chaque source en fonction de ladite activité relative.
— Sélection d'une portion du format multitaux de chaque source en fonction du taux de codage alloué.
— Multiplexage des macro-échantillons.

On a représenté sur la fig. 8 un mode de réalisation du dispositif de concentration des signaux de L = 8 sources sur une voie de transmission LL. Le signal vocal fourni par chacune des huit sources (non représentées) est soumis à un codeur CODE1 à CODE8 à travers une porte (PORT1 à PORT8). Les codeurs CODE1 à CODE8 utilisent les principes du codage en sous-bandes avec allocation dynamique des bits de codage. Chaque codeur est du tpye représenté sur la fig. 2. Plus précisément, les deux groupes de termes $\tilde{C}(i, j)$ et $\tilde{X}(i, j, k)$ sont fournis par un codeur en sous-bandes du signal résiduel en bande de base de type SBC. Le multiplexeur MPX de chaque codeur fournit des blocs de bits disposés selon le format multitaux décrit plus haut (voir fig. 4).

Un contrôleur d'activité 68 détermine l'activité relative de chaque source et en déduit la vitesse de transmission et donc le taux de bits V(k) à allouer à ladite source. Les termes V(k), une fois ajustés, définissent la façon dont les blocs de bits selon le format multitaux correspondant à un bloc d'échantillons de la source (k) doivent être tronqués. Cette mise en format est réalisée en 70. Et, finalement, les données des huit codeurs sont multiplexées en MPLX 72 pour être transmises sur la ligne LL.

Les opérations de détermination d'activité relative de porte et de définition de la vitesse de transmission à allouer à chaque porte sont fondées sur l'application des formules (15) à (17). Mais l'application directe de ces formules aboutit à un problème de réajustement. Tout d'abord, il faut calculer un taux de bits de porte :

$$V(k) = \sum_{i=1}^{p} n(i, k) \qquad (18)$$

qui doit être ajusté pour être égal à l'une des valeurs indiquées à la rubrique «nombre de bits par macro-échantillons» du tableau I.

Ensuite, il faut que :

$$\sum_{k=1}^{L} V(k) = M \cdot L = Nc \qquad (19)$$

où Nc est égal à la portion de capacité du canal LL disponible pour la transmission des macro-échantillons des portes.

Or, l'application des formules (18) et (19) nécessite des réajustements et toute action sur l'une a des répercussions sur l'autre, ce qui complique le procédé. Pour éviter cet inconvénient, on a choisi de scinder le problème en deux.

En effet, de la formule (15) on peut déduire :

$$\sum_{i=1}^{p} n(i, k) = \sum_{i=1}^{p} \left[ \frac{1}{pL} [ML - \sum_{j=1}^{p}\sum_{\ell=1}^{L} \log \tilde{C}(j, \ell)] + \log \tilde{C}(i, k) \right] \qquad (20)$$

d'où

$$V(k) = \frac{1}{L} [ML - \sum_{\ell=1}^{L}\sum_{j=1}^{p} \log \tilde{C}(j, \ell)] + \sum_{i=1}^{p} \log \tilde{C}(i, k) \qquad (21)$$

Si l'on pose :

$$W(\ell) = \sum_{j=1}^{p} \log \tilde{C}(j, \ell) \qquad (22)$$

où W(k) indique l'activité de la porte PORTk.

On obtient alors :

$$V(k) = \frac{1}{L} [ML - \sum_{\ell=1}^{L} W(\ell)] + W(k) \qquad (23)$$

où $\ell$ est un indice de calcul que l'on fait varier de $\ell$=1 à $\ell$=L pour balayer l'ensemble des portes PORT1 à PORTL.

La formule (23) traduit une répartition dynamique optimale des ML bits destinés au codage des signaux entre les L portes en fonction de leurs activités W(k).

On notera en outre ici que, au lieu de déterminer l'activité W(k) de la porte d'ordre k à partir de la formule (22), on peut trier les éléments d'information sensiblement proportionnels à l'énergie de chaque sous-bande, à savoir les termes $\tilde{C}(i, k)$. On obtient :

$$W'(k) = \log \underset{i=1, 2, ..., p}{\text{Max}} [\tilde{C}(i, k)] \qquad (22')$$

Les résultats peuvent encore être améliorés en tenant aussi compte des énergies en bande hautes fréquences ENERG(k), c'est-à-dire des termes E(1, k) et/ou E(2, k) et en utilisant

$$W'(k) = \frac{1}{2} \log \underset{i=1, 2, ..., p}{\text{Max}} [(\tilde{C}i, k))^2, \lambda \cdot \text{ENERG}(k)] \qquad (22'')$$

Expression dans laquelle λ est un coefficient numérique déterminé empiriquement et destiné à tenir compte des différences statistiques de répartition d'énergie entre bandes hautes fréquences et bandes basses fréquences du spectre du signal vocal.

La formule (23) devient :

$$V(k) = \frac{1}{L} [ML - \sum_{\ell=1}^{L} W'(\ell)] + W'(k) \qquad (23')$$

La formule ci-dessus (23') défavorise les locuteurs à faible niveau par rapport aux autres. On peut remédier à cela en normalisant les termes servant de référence à la mesure d'énergie fournie par un locuteur. On définit alors un nouveau terme W''(k) définissant une activité de source pondérée en fonction de l'activité antérieure de la même source :

$$W''(k) = \frac{W'(k)}{<W'(k)>} \qquad (24)$$

où $<W'(k)>$ représente la moyenne des W'(k) sur un temps assez long, de l'ordre de la durée syllabique (par exemple 0,5 à 2 s). En outre, on fixe au terme W'(k) un seuil à ne pas dépasser.

Le contrôleur d'activité 68 reçoit donc les termes $\hat{C}(i, k)$ et commence par les décoder par consultation d'une table logarithmique inverse de celle utilisée pour coder les C(i, k) en $\hat{C}(i, k)$. Ce décodage fournit des termes $\tilde{C}(i, k)$. Ce même contrôleur 68 reçoit aussi les informations d'énergie à savoir E(1, k) et/ou E(2, k). Les opérations des formules (22'') et (24) sont réalisées en 68. Elles sont suivies de l'exécution des opérations de la formule (23') qui fixe le taux de bits V(k), donc la vitesse de transmission, à allouer à chaque source pour le tronçon de signal d'une durée de 20 ms en cours de traitement. Cette information permet de tronquer éventuellement dans le dispositif 70 le bloc de bits multitaux de chaque source pour le ramener au format désiré. Les blocs de bits de chaque source sont ensuite multiplexés dans le temps dans le dispositif 72. Ce dispositif utilise notamment les règles de procédures SDLC.

## Revendications

1. Procédé de codage numérique d'un signal d'origine vocale, à un taux de bits donné, choisi parmi un groupe de taux de codage prédéterminés, ledit procédé utilisant les techniques dites de codage en sous-bandes avec allocation dynamique des bits de codage entre les sous-bandes, et la sélection des signaux d'un nombre donné de sous-bandes en fonction du taux de codage choisi, ledit procédé étant caractérisé par les opérations suivantes:

regroupement des sous-bandes en plusieurs sous-groupes;

définition des taux de bits de codage à allouer à chaque sous-groupe en fonction d'un des taux de codage prédéterminés;

allocation dynamique du pas de quantification de chaque sous-bande au sein de chaque sous-groupe en fonction du taux de bits alloué au sous-groupe et des énergies relatives des signaux contenus dans les sous-bandes dudit sous-groupe;

codage du signal de chaque sous-bande en fonction du pas de quantification alloué;

définition d'un format de trame répétitive dit multitaux comportant un nombre de zones défini en fonction du nombre de sous-groupes possibles;

sélection d'au moins une portion de la trame en fonction du taux de bits de codage choisi.

2. Procédé de codage numérique selon la revendication 1, caractérisé en ce que le signal à coder est scindé en tronçons consécutifs traités en utilisant les techniques dites BCPCM.

3. Procédé de codage numérique selon la revendication 2, caractérisé en ce que ladite répartition en sous-bandes est effectuée sur le signal résiduel d'un codeur de type dit VEPC.

4. Procédé de codage numérique selon la revendication 3, caractérisé en ce que les informations dites ENERG et COEF fournies par le codeur de type VEPC sont regroupées dans une même zone de la trame.

5. Procédé de codage numérique selon la revendication 4, caractérisé en outre en ce que le codage au taux le plus faible est limité à une seule sous-bande choisie en fonction de l'énergie qu'elle contient.

6. Dispositif de codage numérique d'un signal vocal à un taux de bits donné choisi parmi un groupe de taux de codage prédéterminés, ledit dispositif comportant des moyens de codage en p sous-bandes avec répartition dynamique des bits de codage entre les sous-bandes et sélection parmi les p sous-bandes d'un nombre donné de sous-bandes en fonction dudit taux de codage choisi, ledit dispositif étant caractérisé en ce qu'il comporte:

des moyens de groupage pour regrouper (31, 33) lesdites sous-bandes en sous-groupes, chacun desdits sous-groupes correspondant à au moins un desdits taux de codage prédéterminés et incluant le ou les sous-groupe(s) des taux inférieurs;

des moyens de quantification (Q1 à Q4) reliés aux moyens de groupage pour quantifier les signaux des sous-bandes de chaque sous-groupe en allouant dynamiquement les bits de quantification dont le taux est fonction du taux assigné au sous-groupe, entre les sous-bandes dudit sous-groupe;

des premiers moyens de multiplexage (28) reliés aux moyens de quantification et répartissant les bits obtenus par quantification des signaux de sous-bandes au sein d'une trame dite multitaux comportant plusieurs zones, chaque zone recevant les bits des sous-bandes à rajouter au sous-groupe correspondant au taux de codage immédiatement inférieur pour former le sous-groupe suivant;

des moyens de mise en format (28, CTRL) reliés aux premiers moyens de multiplexage et sélectionnant une portion de ladite trame définie en fonction dudit taux de bits choisi.

7. Dispositif de codage numérique selon la revendication 6, caractérisé en ce que les moyens de codage en p sous-bandes utilisent un codeur de type VEPC opérant en mode BCPCM.

8. Dispositif de codage selon la revendication 7, caractérisé en ce que lesdits moyens de multiplexage (28) comportent en outre des moyens pour placer les bits des énergies de bande haute et des coefficients recodés dans au moins une desdites zones et des moyens de mise en format (28, CTRL) reliés aux moyens de multiplexage et sélectionnant une portion de ladite trame définie en fonction du taux de bits de codage choisi.

9. Dispositif de codage selon la revendication 8, caractérisé en outre en ce que ladite information d'énergie contenue dans la bande hautes fréquences est recodée au moins une fois par tronçon de durée donnée.

10. Dispositif de transmission d'un signal vocal à une vitesse donnée à choisir parmi un groupe de vitesses prédéterminées, ledit dispositif de transmission utilisant le dispositif de codage numérique selon l'une des revendications 6 à 9 et étant caractérisé en ce qu'il comporte en outre des moyens de sélection (CTRL) d'une desdites vitesses de transmission prédéterminées et des moyens de transmission (CTRL, 28, L) reliés auxdits moyens de sélection de vitesse et auxdits moyens de multiplexage pour tronquer ladite trame d'une ou de plusieurs zones définies en fonction de la vitesse de transmission choisie, et pour transmettre la trame tronquée.

11. Procédé de concentration des signaux vocaux de plusieurs sources sur une même voie de transmission comportant un codage du signal de chaque source selon le procédé d'une des revendications 1 à 5, caractérisé en outre en ce que le choix de la vitesse de transmission à attribuer à chacune desdites sources est effectué en fonction de l'activité de ladite source par rapport à celles des autres sources.

12. Procédé de concentration de signaux vocaux selon la revendication 11, caractérisé en ce que l'activité de chaque source est pondérée en fonction de son activité antérieure.

13. Procédé de concentration de signaux vocaux selon la revendication 12, caractérisé en ce que ladite activité antérieure est mesurée sur une période de l'ordre de la durée syllabique.

## Patentansprüche

1. Verfahren der digitalen Kodierung eines Stimmsignals mit einem gegebenen Bitwert, der unter einer Gruppe vorgegebener Kodierungswerte ausgewählt wird, wobei das Verfahren die sogenannten Kodierungtechniken in Unterbandbereichen mit dynamischer Zuordnung von Kodierungsbits für die Unterbandbereiche und die Auswahl der Signale einer gegebenen Anzahl Unterbänder je nach dem gewählten Kodierungswert verwendet, und durch folgende Vorgänge gekennzeichnet ist:

Zusammenfassung der Unterbänder in mehrere Untergruppen;

Definition der jeder Untergruppe zuzuordnenden Kodierungsbitwerte in Abhängigkeit von einem der vorgegebenen Kodierungswerte;

dynamische Zuordnung des Quantifizierungsschrittes eines jeden Unterbandes innerhalb einer jeden Untergruppe nach dem der Untergruppe zugeordneten Bitwert und den relativen Energien der in den Unterbändern der besagten Untergruppe enthaltenen Signale;

Kodierung des Signals eines jeden Unterbandes nach dem zugeordneten Quantifizierungsschritt;

Definition des Formats eines wiederholten Rasters, des sogenannten Mehrfachwertformats, der eine Anzahl Zonen enthält, welche in Abhängigkeit von der Anzahl der möglichen Untergruppen festgelegt ist;

Auswahl von mindestens einem Abschnitt des Rasters in Abhängigkeit vom gewählten Kodierbitwert.

2. Verfahren für digitale Kodierung gemäss Anspruch 1, dadurch gekennzeichnet, dass das zu kodierende Signal in aufeinanderfolgende Abschnitte aufgespalten wird, die durch Einsatz der sogenannten BCPCM-Techniken verarbeitet werden.

3. Verfahren digitaler Kodierung gemäss Anspruch 2, dadurch gekennzeichnet, dass die besagte Aufteilung in Unterbänder mit dem Restsignal eines Kodiergeräts vom sogenannten VEPC-Typ ausgeführt wird.

4. Verfahren digitaler Kodierung gemäss Anspruch 3, dadurch gekennzeichnet, dass die sogenannten ENERG- und COEF-Informationen, die vom Kodiergerät vom Typ VEPC geliefert werden, in einer gleichen Rasterzone zusammengefasst werden.

5. Verfahren digitaler Kodierung gemäss Anspruch 4, ferner dadurch gekennzeichnet, dass die Kodierung im schwächsten Wert auf ein einziges Unterband begrenzt wird, das in Abhängigkeit von der in ihm enthaltenen Energie gewählt wird.

6. Vorrichtung für digitale Kodierung eines Stimmsignals mit einem gegebenen Bit-Wert, der unter einer Gruppe von vorgegebenen Kodierwerten gewählt wird, wobei die besagte Vorrichtung Kodiermittel in p Unterbändern mit dynamischer Aufteilung der Kodierbits zwischen den Unterbändern und Auswahl zwischen den p Unterbändern aus einer gegebenen Anzahl Unterbänder in Abhängigkeit vom besagten Kodierwert enthält, dadurch gekennzeichnet, dass es enthält:

Gruppiermittel für die Zusammenfassung (31, 33) der besagten Unterbänder in Untergruppen, wobei jede der besagten Untergruppen mindestens einem der besagten vorgegebenen Kodierwerte entspricht und die Untergruppe(n) der unteren Werte einschliesst;

Quantifiziermittel (Q1 bis Q4), die an die Gruppiermittel gebunden sind, um die Signale der Unterbänder einer jeden Untergruppe zu quantifizieren, durch dynamische Zuordnung der Quantifizierungsbits, deren Wert abhängig vom einer Untergruppe zugeordneten Wert ist, zu den Unterbändern der besagten Untergruppe;

erste Multiplexiermittel (28), die an die Quantifiziermittel gebunden sind und die durch Quantifizierung der Unterbandsignale in einem sogenannten Mehr-Wert-Raster mit mehreren Zonen erhaltenen Bits aufteilt, wobei jede Zone die Bits der Unterbänder empfängt, die der Untergruppe hinzuzufügen sind, welche dem unmittelbar kleineren Kodierwert entspricht, um die nächste Untergruppe zu bilden;

Mittel für die Formatierung (28, CTRL), die an die ersten Multiplexiermittel gebunden sind und einen Abschnitt des besagten Rasters auswählen, der in Abhängigkeit vom besagten gewählten Bit-Wert bestimmt wird.

7. Vorrichtung für digitale Kodierung gemäss Anspruch 6, dadurch gekennzeichnet, dass die Kodiermittel in p Unterbändern ein Kodiergerät vom Typ VEPC verwenden, der in der Betriebsart BCPCM betrieben wird.

8. Kodiervorrichtung gemäss Anspruch 7, dadurch gekennzeichnet, dass die besagten Multiplexiermittel (28) ausserdem Mittel enthalten, um die Bits der Energien des oberen Bandes und der neu kodierten Beiwerte in mindestens einer der besagten Zonen anzuordnen und Formatierungsmittel (28, CTRL), die an die besagten Multiplexiermittel gebunden sind und in Abhängigkeit vom gewählten Kodierbitwert einen Abschnitt des besagten definierten Rasters auswählen.

9. Kodiervorrichtung gemäss Anspruch 8, ferner dadurch gekennzeichnet, dass die besagte Energieinformation, die im oberen Frequenzband enthalten ist, neu kodiert wird, mindestens einmal pro gegebenen Dauerabschnitt.

10. Vorrichtung für die Übertragung eines Stimmsignals in einer gegebenen Geschwindigkeit, die unter einer Gruppe von vorgegebenen Geschwindigkeiten zu wählen ist, wobei die besagte Übertragungsvorrichtung die Vorrichtung digitaler Kodierung gemäss einem der Ansprüche 6 bis 9 verwendet und dadurch gekennzeichnet ist, dass sie ausserdem Mittel (CTRL) für die Auswahl einer der besagten vorgegebenen Übertragungsgeschwindigkeiten und Übertragungsmittel (CTRL, 28, L) in Verbindung mit den besagten Mitteln für die Auswahl der Geschwindigkeit und mit den besagten Multiplexiermitteln, um den besagten Raster um eine oder mehrere Zonen zu verkürzen, je nach der gewählten Übertragungsgeschwindigkeit, und um den verkürzten Raster zu übertragen, enthält.

11. Verfahren für die Konzentration von Stimmsignalen mehrerer Quellen auf einem einzigen Übertragungskanal mit Kodierung des Signals einer jeden Quelle nach dem Verfahren von einem der Ansprüche 1 bis 5, ferner dadurch gekennzeichnet, dass die Wahl der Übertragungsgeschwindigkeit, die jeder der besagten Quellen zuzuordnen ist, in Abhängigkeit von der Aktivität der besagten Quelle gegenüber denen der anderen Quellen vorgenommen wird.

12. Verfahren für die Konzentration von Stimmsignalen gemäss Anspruch 11, dadurch gekennzeichnet, dass die Aktivität einer jeden Quelle nach ihrer früheren Aktivität gewichtet wird.

13. Verfahren für die Konzentration von Stimmsignalen gemäss Anspruch 12, dadurch gekennzeichnet, dass die besagte frühere Aktivität an einer Periode von der Grössenordnung der Dauer einer Silbe gemessen wird.

## Claims

1. A digital coding method for coding a speech signal at a given bit rate chosen from amongst a group of predetermined coding rates, said method making use of the so-called sub-band coding techniques with a dynamical allocation of the coding bits between the sub-bands and the selection of the signals of a given number of sub-bands in terms of the chosen coding rate, said method being characterized by the following operations:

grouping the sub-bands into a plurality of sub-groups;

defining the coding bit rates to be allocated to each sub-group in terms of one of the predetermined coding rates;

dynamically allocating the quantizing step of each sub-band within each sub-group in terms of the bit rate allocated to the sub-group and of the relative energies of the signals contained in the sub-bands of said sub-group;

coding the signal of each sub-band in terms of the allocated quantizing step;

defining a so-called multirate repetitive frame including a number of zones which is defined in terms of the number of possible sub-groups;

selecting at least one portion of the frame in terms of the chosen coding bit rate.

2. A digital coding method according to Claim 1, characterized in that the signal to be coded is subdivided into consecutive blocks which are processed with the so-called BCPCM techniques.

3. A digital coding method according to Claim 2, characterized in that said sub-band splitting is carried out on the residual signal of the so-called VEPC type coder.

4. A digital coding method according to Claim 3, characterized in that the so-called ENERG and COEF information supplied by the VEPC type coder is grouped into a same zone of the frame.

5. A digital coding method according to Claim 4, being further characterized in that the lowest rate coding is limited to a single sub-band chosen in terms of the energy it contains.

6. A digital coding device for coding a speech signal at a given bit rate chosen from amongst a group of predetermined coding rates, said device being comprised of p sub-band coding means with a dynamic allocation of the coding bits between the sub-bands and a selection from amongst the p sub-band, of a given number of sub-bands in terms of said chosen coding rate, said device being characterized in that it includes:

grouping means for grouping (31, 33) said sub-bands into sub-groups, each of said sub-groups corresponding to at least one of said predetermined coding rates and including the lowest rate sub-group(s);

quantizing means (Q1 through Q4) connected to grouping means for quantizing the signals of the sub-bands in each sub-group by dynamically allocating the quantization bits the rate of which is a function of the rate assigned to the sub-group, between the sub-bands of said sub-group;

first multiplexing means (28) connected to the quantizing means and dispatching the bits obtained by quantization of the sub-band signals within a multirate frame comprised of a plurality of zones, each zone receiving the bits of the sub-bands to be added to the sub-group corresponding to the immediately lower coding rate in order to form the following sub-group;

formatting means (28, CTRL) connected to the first multiplexing means and selecting a portion of said frame defined in terms of said chosen bit rate.

7. A digital coding device according to Claim 6, characterized in that the p sub-band coding means make use of a BCPCM mode-operated VEPC type coder.

8. A digital coding device according to Claim 7, characterized in that said multiplexing means (28) are further comprised of means for dispatching the bits representative of the high frequency band energies and of the recoded coefficients into at least one of said zones, and formatting means (28, CTRL) connected to the multiplexing means and selecting for a portion of said frame defined in terms of the chosen coding bit rate.

9. A digital coding means according to Claim 8, further characterized in that said energy information contained in the high frequency band is recoded at least once per given block duration.

10. A speech signal transmission device for transmitting speech signals at a given rate to be chosen from a group of predetermined rates, said transmission device making use of the digital coding device according to any one of the Claims 6 through 9 and being characterized in that it further includes speed selection means (CTRL) for selecting one of said predetermined transmission rates, and transmission means (CTRL, 28, L) connected to said speed selection means and to said multiplexing means in order to discard from said frame one or several zones defined in terms of the chosen transmission rate, and transmit the so-truncated frame.

11. A speech signal concentration method for concentrating speech signals from a plurality of sources, over a single transmission channel, including coding the signal from each source according to the method of Claims 1 through 5, being further characterized in that the choice of the transmission rate to be allocated to each of said sources is made in terms of the activity of said source with respect to those of the other sources.

12. A speech signal concentration method according to Claim 11, characterized in that the activity of each source is weighted in terms of its previous activity.

13. A speech signal concentration method according to Claim 12, characterized in that said previous activity is measured over a time period in the order of the syllabical duration.

FIG. 1

FIG.2

0 093 219

FIG.3

F0

| 48 BITS | F1 | F2 | F3 | F4 |

12 Kbps

9,6

7,2

4,8

2,4

FIG.4A

F0: $E_1^3$ $E_1^2$ $E_1^1$ $E_1^0$ $K_1^4$ $K_1^3$ --- $K_1^0$ $K_2^4$ $K_2^3$ --- $K_2^0$ --- $K_8^0$ P0 P1 $c_5^3$ $c_5^2$ $c_5^1$ $c_5^0$ $X_{5,1}^2$ $X_{5,1}^1$ $X_{5,2}^2$ $X_{5,2}^1$ -- $X_{5,5}^2$ $X_{5,5}^1$

FIG.4B

F1: $E_2^3$ $E_2^2$ $E_2^1$ $E_2^0$ $c_4^3$ $c_4^2$ $c_4^1$ $c_4^0$ $c_3^3$ $c_3^2$ $c_3^1$ $c_3^0$ $c_2^3$ $c_2^2$ $c_2^1$ $c_2^0$ $X_{5,1}^0$ $X_{2,1}^1$ $X_{2,1}^0$ $X_{3,1}^0$ $X_{4,1}^1$ $X_{4,1}^0$ --- $X_{5,2}^0$ ¬ $X_{2,1}^1$ -- $X_{4,2}^0$ --

$X_{5,3}^0$ --- $X_{4,3}^0$ --- $X_{5,4}^0$ --- $X_{4,4}^0$ $X_{5,5}^0$ --- $X_{4,5}^0$ $x^*$ $x^*$

$x^*$ = RESERVE

FIG.4C

F2: $c_1^3$ $c_1^2$ $c_1^1$ $c_1^0$ $c_6^3$ $c_6^2$ $c_6^1$ $c_6^0$ $X_{1,1}^4$ $X_{1,1}^3$ $X_{1,1}^2$ ------------------ $X_{6,5}^0$

FIG.4D

F3: $c_7^3$ --------- $c_9^0$ $X_{7,1}^0$ ------------------- $X_{8,5}^0$ $x^*$

FIG.4

FIG.4E

F4: $c_{10}^3$ ---------- $c_{12}^0$ $X_{10,1}^1$ ---- $X_{12,5}^0$ $x^*$

| FIG.4A | 4B | 4C | 4D | 4E |

FIG.5

# FIG.6

# FIG.7

PORT 1 — [S B 1] — X ( 1, j ,1)
X ( 2, j ,1)
X (p, j ,1)

PORT 2 — [S B 2] — X(1, j ,2)
X(2, j ,2)
X(p, j ,2)

PORTL — [S B L] — X(1, j ,L)
X(2, j ,L)
X(p, j ,L)

# FIG.8